# EUROPEAN PATENT APPLICATION

(11) **EP 1 732 154 A1**
(43) Date of publication of application: **13.12.2006**
(21) Application number: 05105133.2
(22) Date of filing: 10.06.2005
(51) Int. Cl.: H01M 8/02, H01M 8/12, H01M 8/24

(54) **Flow Channel on Interconnect of Planar Solid Oxide Fuel Cell**

(71) Applicant: Atomic Energy Council - Institute of Nuclear Energy Research, Lungtan, Taoyuan, Taiwan (TW); National Central University, Jung-li City, 320 Taoyuan (TW)
(72) Inventor: CHYOU, Yau-Pin, 114, Taipei (TW); SHY, Shenq-Yang, 32054, Taoyuan (TW); CHENG, Yung-Neng, 320, Taoyuan (TW); YEN, Cheng-Ho, 830, Kaohsiung (TW)
(74) Representative: Beck, Michael Rudolf

(57) **Abstract**

The present invention is a flow channel on an interconnect of a planar solid oxide fuel cell, comprising a first flow area and a second flow area where operation flows of a fuel cell flow evenly and smoothly to the interconnect to uniform the current density distribution of an electricity generation substrate, while the temperature differential in the fuel cell is lowered; the reliability of operation is improved; the performance of the fuel is elevated; and the usage period of the fuel cell is prolonged.

## Description

### FIELD OF THE INVENTION

The present invention relates to an interconnect of a fuel cell; more particularly, relates to evenly and smoothly flowing operation flows of the fuel cell to the interconnect to uniform current density distribution of an electricity generation substrate while the temperature differential in the fuel cell is lowered; the reliability of operation is improved; the performance of the fuel is elevated; and the usage period of the fuel cell is prolonged.

### DESCRIPTION OF THE RELATED ART(S)

Energy is the foundation for exploiting the resources on the earth. In another word, the development of the technologies and the exquisite lives we have nowadays are all based on efficiently utilizing the energy. Nevertheless, electricity is of no doubt the most convenient energy for human; therefore, for centuries, the scientists and the engineers have researched in all kinds of energies with much effort to meet the requirements of the economy and the society. Fuel cell (FC) is a highly expected green energy by the energy field in the world recently. The governments, researchers, and industrial circles have been allied and associated for strategies, researches and developments of the FC hoping that such a green energy can be implemented in human's daily life in a short time.

From the viewpoint of system efficiency, the FC has high potential. Especially when combined with a gas turbine, the FC has a very high efficiency on cycling, which is the top among those similar technologies. During these years, the governments and the fields of automobile, electricity and energy has put much emphasis on FC technologies, which makes FC one of the most potential green energy in the future.

The idea of producing electricity by an electrochemical reaction comes up in 19^{th} century. From then on, the scientists have continuously worked on technologies of so called 'Fuel Cell' hoping that it can be implemented in human's daily life. Among them, a demo product using Solid Oxide Fuel Cell (SOFC) has been invented for over 100 years. But, in the process of commercializing the FC, some technique obstacles have come up with. Since 1960s, some researchers have worked on developing the technology of a tubular SOFC as well as an SOFC electricity generation system, which can be taken as a re-beginning of developing such a technology. In mid-1980s, there is a breakthrough in the packaging technology of a planar SOFC, which makes the cost become more competitive to that of a tubular SOFC. Hence, companies or researchers (all over America, Europe, Japan, Australia, etc.) mostly focus on the development of a planar system.

Interconnect is one of the key components in a SOFC, whose material can be of ceramics or metals. The main function of an interconnect is to link the cathode and the anode of two adjacent single-cell while playing a role as a physical barrier. A reduction environment is protected here by isolating an electrode of air and one of fuel. Just the like, an oxidation environment is also protected by isolating an electrode of fuel and one of air. Thus, an interconnect has to meet the following conditions:
Under the working temperature of a SOFC, the interconnect has to be of good conductivity;
Under the temperature of 800°C of a reduction environment or of an oxidation environment, the interconnect has to be of a proper size, microstructure, chemical property and phase stability;
The permeation between the oxygen and the hydrogen has to be reduced in the interconnect to avoid direct interaction;
Under the environment of room temperature or high temperature, the thermal expansion coefficient of the interconnect has to be comparable to that of the adjacent components;
Under the environment of high temperature, diffusion reaction between the interconnect and the adjacent components has to be prevented;
The interconnect has to be of good thermal conductivity;
The interconnect has to be well anti-oxidative, anti-vulcanized and anti-carbonized;
The interconnect has to be able to be obtained and produced easily to lower the cost; and
The interconnect has to be of good high-temperature strength and be anti-creepy.

Now, a metal interconnect in SOFC has become the main stream, which can be chromium-based or iron-based. A chromium-based interconnect appears in earlier day with higher temperature strength while with more cost, harder producing process and worse expansibility as comparing to those of an iron-based one. Therefore, the trends on interconnect development now is on developing an iron-based interconnect. Besides, if the operation temperature of a SOFC can be lowered to 700°C, a ferritic stainless steel can be used as a material for producing an interconnect with greatly lowered cost.

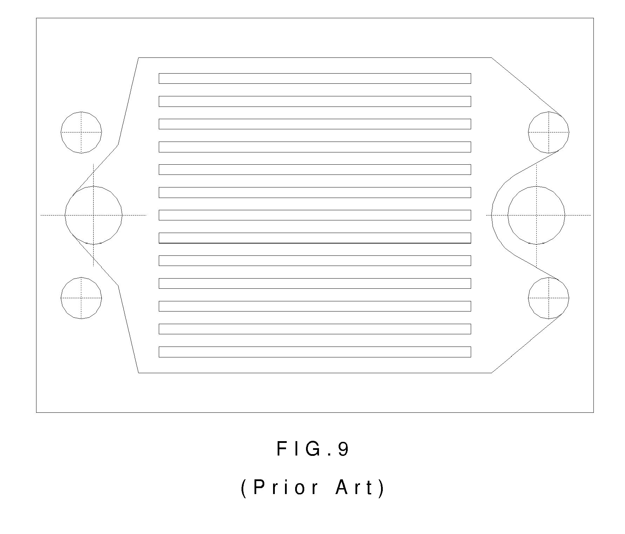

Considerations for a general interconnect of a SOFC are usually on the number of the inlets and outlets and their positions, yet seldom on the uniformness of the velocity of the operation flows in the flow channel of the interconnect. Often, the lesser the number of the inlets and outlets is, the slower the velocity of the fluid in the flow channel is. On the contrary, the more the number of the inlets and outlets is, the faster the velocity of the fluid is, although with more complex design as a whole, with increased complexity in production, and with much more cost. Consequently, there are few that comprises more than three inlets and outlets for an operation flow. Please refer to FIG.9, which is a view of a design for a flow channel in an interconnect of a SOFC according to a prior art. The interconnect comprises two inlets and one outlet where the velocity of the operation flow does not distribute evenly. The velocity of the operation flow between the inlets and the outlet is higher while that at two sides is lower.

In "Three-dimensional thermo- fluid electrochemical modeling of planar SOFC stacks" by K. P. Recknagle, R. E. Williford, L. A. Chick, D. R. Rector, and M. A. Khaleel (Journal of Power Sources, 113, pp. 109-114, 2003), the impacts on the distribution of the temperature as well as current density in an electricity generation substrate made by the flow channel deployment of cross-flow, co-flow and counterflow are discussed. In general, the distribution of the temperature as well as current density with a flow channel deployment of co-flow is most even; the fuel utilization with a flow channel deployment of counterflow is higher; and the highest distribution of the temperature as well as current density with a flow channel deployment of cross-flow is at the interflow of the fuel from the inlets and the air from the outlet.

In "3-D model calculation for plane SOFC" by H. Yakabe, T. Oyiwara, M. Hishinuma, and I. Yasuda (Journal of Power Sources, 102, pp. 144-154, 2001), an analysis model for a flow channel is established to efficiently analyze the velocity distribution in the flow channel. The inlet and outlet of the flow channel are in an anti-symmetrical design with one inlet and one outlet. The emphasis is only on the calculation of the velocity distribution in the flow channel.

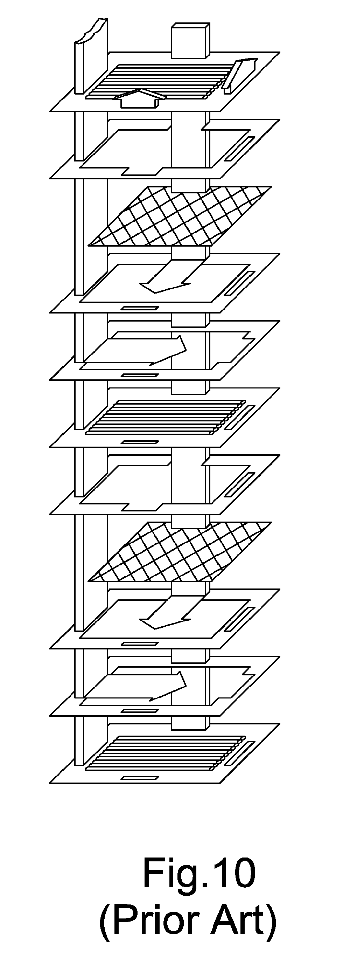

In "Material research for planer SOFC stack" by T. -L. Wen, D. Wang, M. Chen, H. Tu, Z. Zhang, H. Nie and W. Huang (Solid State Ionics, 148, pp513-519, 2002), the materials for the components of a FC stack are described with a figure of the components of the FC stack (as shown in FIG.10). The flow channel of an interconnect is deployed as a cross-flow one with a symmetrical design of two inlets and two outlets, yet in lack of considering the uneven velocity in the flow channel.

The German patent of DE10039024A1 is a method for assembling a glass-ceramics-sealed SOFC stack. A co-flow for a glass-ceramics-sealed SOFC stack is designed, where the flow directions of the fuel and the air are the same; flow areas are formed by ribs and furrows in an interconnect; yet the design of the number of inlets and outlets and the detail design of the flow area are not described.

So, a novel design of a flow channel to improve the electricity generation efficiency of a fuel cell by mending the unevenness of the flow velocity is required.

### SUMMARY OF THE INVENTION

Therefore, the main purpose of the present invention is to evenly and smoothly flow operation flows of a fuel cell to an interconnect to uniform the current density distribution of an electricity generation substrate by way of a first and a second flow areas. As a result, the temperature differential in the fuel cell is lowered; the reliability of operation is improved; the performance of the fuel is elevated; and the usage period of the fuel cell is prolonged.

To achieve the above purpose, the present invention is a flow channel on an interconnect of a planar SOFC, comprising a first flow area and a second flow area. The first flow area is deposed on a surface of the interconnect, comprising a first channel, at least one inlet at an end connecting with the first channel, and an outlet at the other end connecting with the first channel. The second flow area is deposed on the opposite surface of the interconnect, comprising a second channel, at least one inlet at an end connecting with the second channel while deposed at two sides of the outlet of the first flow area, and an outlet at the other end connecting with the second channel while deposed between the inlets of the first flow area. Accordingly, operation flows of the fuel cell can evenly and smoothly flow to the interconnect to uniform the current density distribution of the electricity generation substrate by way of the first and the second flow areas. As a result, the temperature differential in the fuel cell is lowered; the reliability of operation is improved; the performance of the fuel is elevated; and the usage period of the fuel cell is prolonged.

### BRIEF DESCRIPTIONS OF THE DRAWINGS

The present invention will be better understood from the following detailed descriptions of the preferred embodiments according to the present invention, taken in conjunction with the accompanying drawings, in which
FIG. 1 is a perspective view of a first preferred embodiment according to the present invention;
FIG.2 is another perspective view of the first preferred embodiment according to the present invention;
FIG.3 is an exploded view of an assembly of the first preferred embodiment according to the present invention;
FIG.4 is a view of the assembly of the first preferred embodiment according to the present invention;
FIG.5 and FIG.6 are views of the flow directions of the first preferred embodiment according to the present invention;
FIG.7 is a perspective view of a second preferred embodiment according to the present invention;
FIG.8 is another perspective view of the second preferred embodiment according to the present invention;
FIG.9 is a view of a design for a flow channel in an interconnect of a Solid Oxide Fuel Cell (SOFC) according to a prior art; and
FIG.10 is an exploded view of a SOFC according to the prior art.

### DESCRIPTION OF THE PREFERRED EMBODIMENTS

The following descriptions of the preferred embodiments are provided to understand the features and the structures of the present invention.From a viewpoint of flood prevention, a buffer area like a reservoir helps to slow down the velocity of a stream; besides, a design of divisional islands make a stream detoured to uniform the velocity of the stream by lengthening the distance. And, as what a turbine-blade equilibrated valve can do, the idea of such a valve can be extendedly applied to an equilibrium slot between the ribs of the interconnect so that the velocity can be uniformed by balancing the pressure with the design of the slot. Besides, a deflector also helps uniform the velocity. Thus, the above-stated are the main ideas and principles according to the present invention.

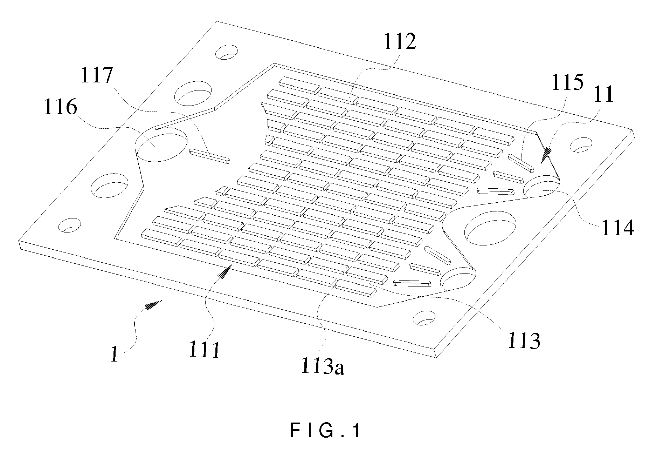

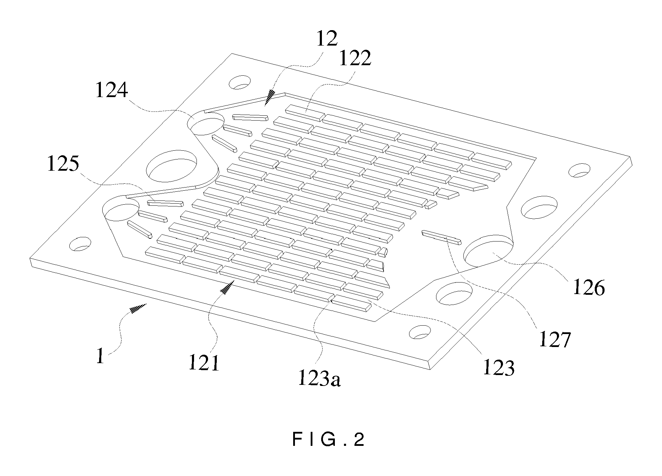

Please refer to FIG.1 and FIG.2, which are a perspective view and another perspective view of a first preferred embodiment according to the present invention. As shown in the figures, the present invention is a flow channel on an interconnect of a planar SOFC, comprising a first flow area 11 and a second flow area 12 where operation flows of a fuel cell flow evenly and smoothly to the interconnect 1 to uniform the current density distribution of an electricity generation substrate (not shown in the figures). As a result, the temperature differential in the fuel cell is lowered; the reliability of operation is improved; the performance of the fuel is elevated; and the usage period of the fuel cell is prolonged.

The first flow area 11 is deposed on a surface of the interconnect 1, comprising a first channel 111, where the channel comprises a plurality of ribs 112. A slot 113 is deposed between every two adjacent ribs 112 in a direction to form a flow path for flowing a first operation flow; and the area where the first operation flow flows through is an active area of the electricity generation substrate for generating an electricity power. Yet another slot 113a is also deposed between every two adjacent ribs 112 in a right-angle direction to uniform the pressure and to increase the active area. The first flow area 11 comprises at least one inlet 114 at an end connecting with the first channel 111. A plurality of deflecting parts 115 is deposed outside of a side of a brim of the inlet 114 to evenly distribute the velocity of the first operation flow. The first flow area 11 comprises one outlet 116 at the other end connecting with the first channel 111. A deflecting part 117 is deposed correspondingly outside of a side of a brim of the outlet 116 to increase the distance for the first operation flow to flow from the inlet 114 to the outlet 116 so that the velocity of the first operation flow of the two deflecting parts 115,117 can be uniformed. The brim at the end of the first channel 111 which is corresponding to the outlet 116 is in a curve shape to uniform the velocity of the first operation flow in the first flow area 11.

The second flow area 12, comprising a second channel 121 with a plurality of ribs 122, is deposed on the opposite surface of the first interconnect 1. A slot 123 is deposed between every two adjacent ribs 122 in a direction to form a flow path for flowing the second operation flow; and the area where the second operation flow flows through is an active area of the electricity generation substrate for generating an electricity power. Yet another slot 123a is also deposed between every two adjacent ribs 122 in a right-angle direction to uniform the pressure and to increase the active area. The second flow area 12 comprises at least one inlet 124 at an end connecting with the second channel 121. A plurality of deflecting parts 125 at two sides of the outlet 116 of the first flow area 11 is deposed outside of a side of a brim of the inlet 124 to evenly distribute the velocity of the second operation flow. The second flow area 12, connecting with the second channel 121, comprises at the other end an outlet 126 between the inlets 114 of the first flow area 11. A deflecting part 127 is deposed correspondingly outside of a side of a brim of the outlet 126 to increase the distance for the second operation flow to flow from the inlet 124 to the outlet 126 so that the velocity of the second operation flow of the deflecting part 127 can be uniformed. The side of a brim of the second channel 121 which is corresponding to the outlet 126 is in a curve shape to uniform the velocity of the second operation flow in the second flow area 12. Thus, a novel flow channel on an interconnect of a fuel cell is formed.

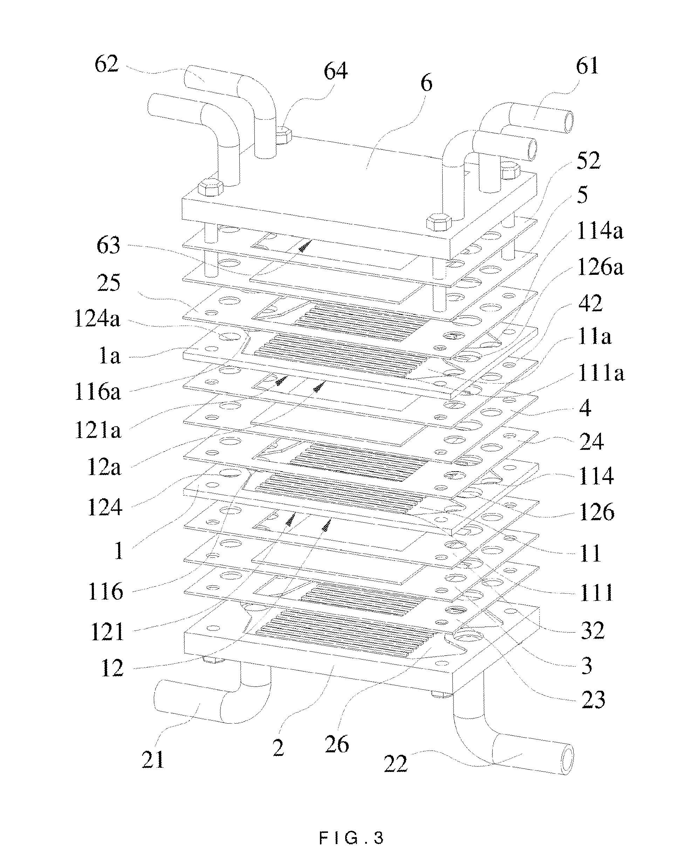

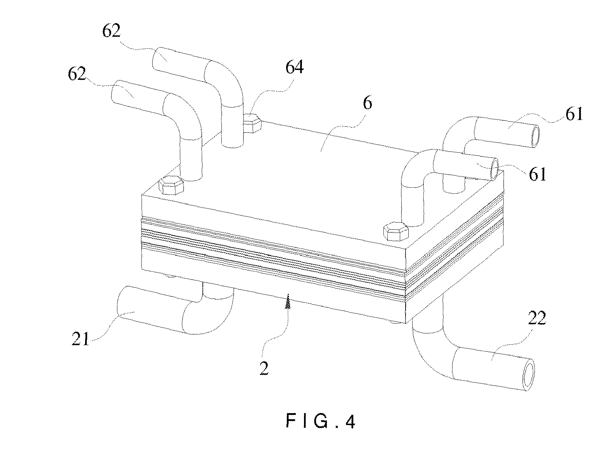

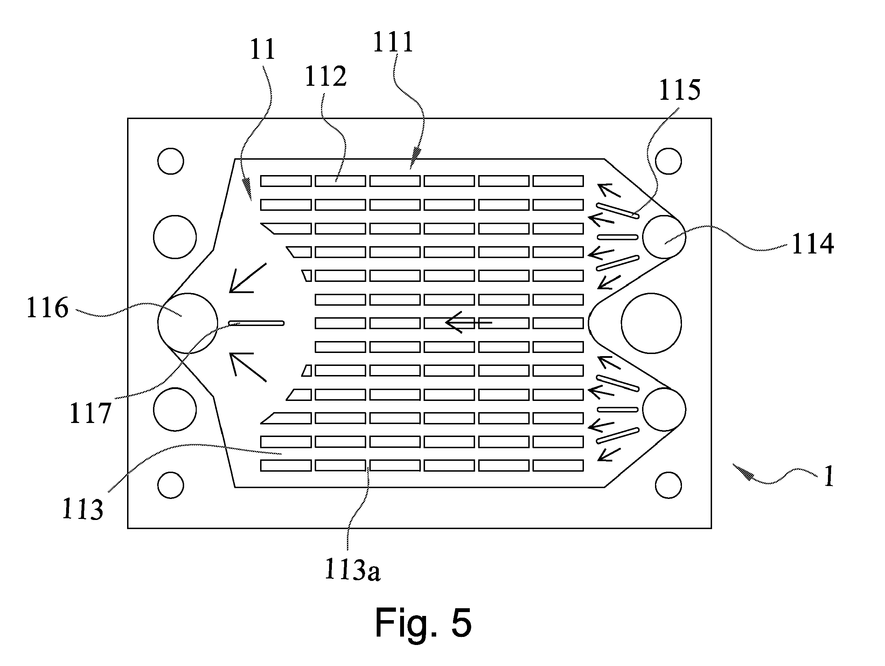

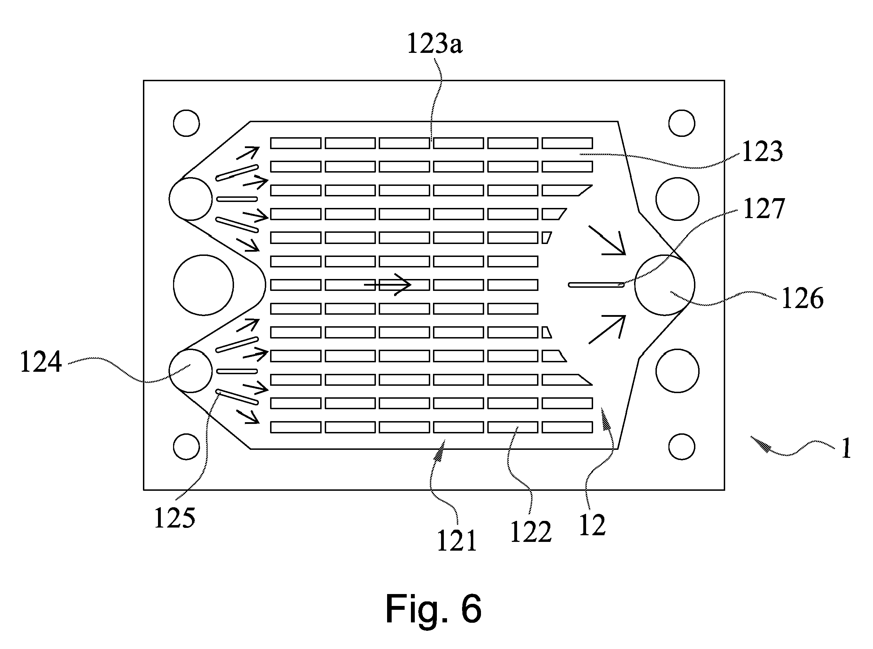

Please refer to FIG.3 through FIG.6, which are an exploded view of an assembly, a view of the assembly, and views of the flow directions, of the first preferred embodiment according to the present invention. As shown in the figures, on assembling, a base 2 is obtained first, which is connected with an output tube 21,22 at each end respectively. A first interconnect 1 is deposed on the base 2, and a second interconnect 1a is deposed on the first interconnect 1. A cover 6 is deposed on the second interconnect 1a, where the cover 6 is connected with an input tube 61,62 at each of two opposite ends respectively. A first electricity generation substrate 3 is deposed between the base 2 and the first interconnect 1 where a first washer 23,32 is deposed between the first substrate 3 and the base 2 as well as between the first substrate 3 and the first interconnect 1 both to prevent the operation flows from leaking from any gap. Outlets 116,116a are corresponding to an opening of an output tube 21 for outputting the first operation flow; and the other outlets 126,126a are corresponding to an opening of the other output tube 22 for outputting the second operation flow. A second electricity generation substrate 4 is deposed between the two interconnects 1,1a. A second washer 24,42 is deposed at the contact surface between the first interconnect 1 and the second substrate 4 as well as between the second interconnect 1a and the second substrate 4 both to prevent the operation flows from leaking from any gap. A third electricity generation substrate 5 is deposed between the cover 6 and the first interconnect 1 where a third washer 25,52 is deposed between the third substrate 5 and the second interconnect 1a as well as between the third substrate 5 and the cover 6 both to prevent the operation flows from leaking from any gap. Inlets 114,114a are corresponding to an opening of an input tube 61 for inputting the first operation flow; and the other inlets 124,124a are corresponding to an opening of the other input tube 62 for inputting the second operation flow. A flow area 26 of the base 2 is corresponding to a second flow area 12 of the first interconnect 1; a first flow area 11 of the first interconnect 1 is corresponding to a second flow area 12a of the second interconnect 1a; a first flow area 11a of the second interconnect 1a is corresponding to a flow area 63 of the cover 6; and, with the help of a locking part 64, the whole package is assembled and locked.

On using, a required first operation flow is directed from the input tube 61 of the cover 6, where the first operation flow is guided to flow from the inlet 114a at an end of the first flow area 11a on the second interconnect 1a to the first channel 111a of the second interconnect 1a; to flow from the first channel 111a to the outlet 116a of the second interconnect 1a; to flow through the outlet 116 of the first flow area 11 of the first interconnect 1; and to flow directly to the output tube 21 of the base 2. Another portion of the first operation flow is guided to flow directly from the input tube 61 of the cover 6 to the inlet 114 at the end of the first flow area 11 on the first interconnect 1; to flow to the first channel 111 of the first interconnect 1; to flow from the first channel 111 to the outlet 116 of the first interconnect 1; and to flow to the output tube 21 of the base 2. The other portion of the first operation flow flows directly from the input tube 61 of the cover 6 to the flow area 26 on the base 2 to be outputted through the output tube 21 of the base 2.

A second operation flow is directed to flow from the other input tube 62 of the cover 6 to the outlet 126a of the second flow area 12a of the second interconnect 1a through the flow area 63 of the cover 6; and to flow directly to the output tube 22 of the base 2. Another portion of the second operation flow is guided to flow directly from the other input tube 62 of the cover 6 to the second channel 121a of the second interconnect 1a through the inlet 124a at an end of the second flow area 12a of the second interconnect 1a; to flow from the second channel 121a to the outlet 126a of the second flow area 12a; and to flow to be outputted through the output tube 22 of the base 2. The other portion of the second operation flow is guided to flow directly from the other input tube 62 of the cover 6 to the second channel 121 of the first interconnect 1 through the inlet 124 at the end of the second flow area 12 of the first interconnect 1; to flow from the second channel 121 to the outlet 126 of the first flow area 12 of the first interconnect 1; and to flow to be outputted through the output tube 22 of the base 2. With these two different operation flows of counterflow flowing through the upper and lower flow areas of the electricity generation substrates 3,4,5 , electricity can be generated.

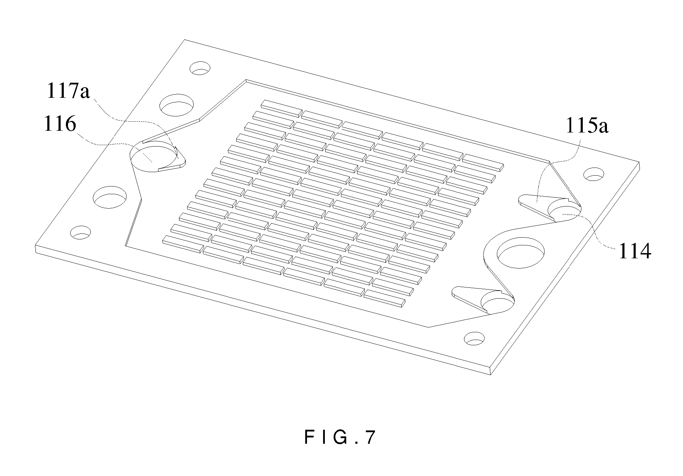

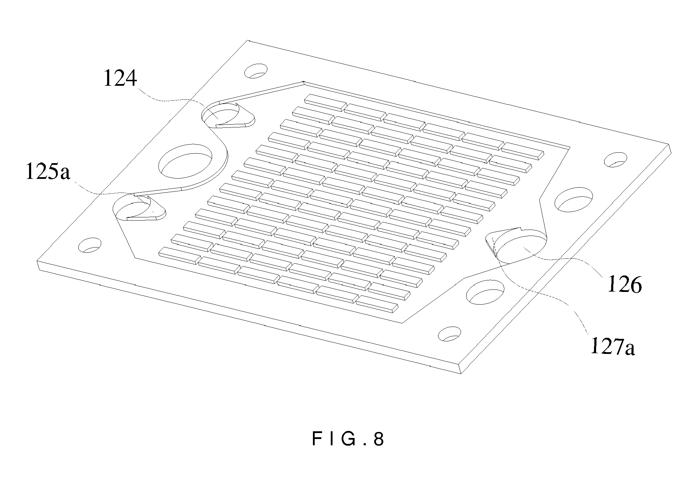

Please refer to FIG.7 and FIG.8, which are a perspective view and another perspective view of a second preferred embodiment according to the present invention. As shown in the figures, the present invention is a flow channel on an interconnect of a planar SOFC, comprising a first flow area 11 and a second flow area 12. The first flow area 11 is deposed on a surface of the interconnect 1, comprising a first channel 111, where the channel comprises a plurality of ribs 112. A slot 113 are formed between every two adjacent ribs 112 in a direction; and another slot 113a, in a right-angle direction. The first flow area 11 comprises at least one inlet 114 at an end connecting with the first channel 111. A plurality of deflecting parts 115a is raised and deposed on a side of a brim of the inlet 114. The first flow area 11 comprises one outlet 116 at the other end connecting with the first channel 111. A deflecting part 117a is raised and deposed on a side of a brim of the outlet 116. The brim at the end of the first channel 111 which is corresponding to the outlet 116 is in a curve shape.

The second flow area 12, comprising a second channel 121 with a plurality of ribs 122, is deposed on the opposite surface of the first interconnect 1. A slot 123 are formed between every two adjacent ribs 122 in a direction; and another slot 123a, in a right-angle direction. The second flow area 12 comprises at least one inlet 124 at an end connecting with the second channel 121. A plurality of deflecting parts 125a at two sides of the outlet 116 of the first flow area 11 is raised and deposed on a side of a brim of the inlet 124. The second flow area 12, connecting with the second channel 121, comprises at the other end an outlet 126 between the inlets 114 of the first flow area 11. A deflecting part 127a is raised and deposed correspondingly on a side of a brim of the outlet 126. A side of a brim of the second channel 121, which is corresponding to the outlet 126, is in a curve shape. Thus, a novel flow channel on an interconnect of a fuel cell is formed. In addition, the present invention can be applied to operation flows of co-flow.

To sum up, the present invention is a flow channel on an interconnect of a planar SOFC, where operation flows of a fuel cell flow evenly and smoothly to an active area of the interconnect for a steady electricity generation.

The preferred embodiments herein disclosed are not intended to unnecessarily limit the scope of the invention. Therefore, simple modifications or variations belonging to the equivalent of the scope of the claims and the instructions disclosed herein for a patent are all within the scope of the present invention.

## Claims

1. A flow channel on an interconnect of a planar solid oxide fuel cell (SOFC), said interconnect comprising:
- a first flow area deposed on a surface of said interconnect, comprising a channel, at least one inlet connected with said channel at an end of said first flow area, and an outlet connected with said channel at the opposite end of said first flow area; and
- a second flow area deposed on the surface of said interconnect opposite to said first flow area, comprising a channel, at least one inlet deposed at two opposite sides of said outlet of said first flow area and connected with said channel at an end of said second flow area, and an outlet deposed between said at least one inlet of said first flow area and connected with said channel at the opposite end of said second flow area,
wherein said channel of said first flow area and said channel of said second flow area comprises a plurality of ribs;
wherein a slot forming a flow path is deposed between every two adjacent ribs in a direction; and
wherein another slot is deposed between every two adjacent ribs in a right-angle direction to said direction.

2. The flow channel on an interconnect of a planar SOFC according to claim 1, wherein the end of said flow paths corresponding to said outlet are arranged to a curve line.

3. The flow channel on an interconnect of a planar SOFC according to claim 1 or 2, wherein a plurality of deflecting parts is deposed outside of a side of a brim of said inlet.

4. The flow channel on an interconnect of a planar SOFC according to one of claims 1 to 3, wherein a deflecting parts is raised and deposed against a side of a brim of said inlet.

5. The flow channel on an interconnect of a planar SOFC according to one of claims 1 to 4, wherein a deflecting parts is deposed outside of a side of a brim of said outlet.

6. The flow channel on an interconnect of a planar SOFC according to one of claims 1 to 5, wherein a deflecting parts is raised and deposed against a side of a brim of said outlet.

7. The flow channel on an interconnect of a planar SOFC according to one of claims 1 to 6, wherein said flow channel is used with a fuel and an air forming a co-flow.
